# EUROPEAN PATENT APPLICATION

(11) **EP 3 939 476 A1**
(43) Date of publication of application: **19.01.2022**
(21) Application number: 21184957.5
(22) Date of filing: 12.07.2021
(51) Int. Cl.: A47C 9/00, B60N 2/16, A47C 7/02, A47C 7/14

(54) **SUPPORT UNIT AND SEAT COMPRISING AN INTEGRATED SUPPORT UNIT**

(30) Priority: 16.07.2020 DK PA202000853
(71) Applicant: Vic Engineering ApS, 8800 Viborg (DK)
(72) Inventor: Chicinas, Viorel, 8800 Viborg (DK)
(74) Representative: Andreasen, Søren Laursen Vasegaard

(57) **Abstract**

A support unit (2) for changing the configuration of a support area (4) intended for being used to support a seated person (6) is disclosed. The support unit (2) comprises at least one electrically powered actuator (8). The support unit (2) comprises a first movably mounted platform (I) and a second movably mounted platform (II). The first and second movably mounted platforms (I, II) are connected to and configured to be driven by the at least one actuator (8) in such a manner that the first and second movably mounted platforms (I, II) can be raised and lowered relative to each other.

## Description

### Field of invention

The present invention relates to a support unit for providing a varying support structure. The present invention also relates to a seat comprising a support unit for providing a varying seat support structure.

### Prior art

It is known that a monotonous posture is critical. For wheelchair users, truck drivers, taxi drivers and other people spending a lot of time driving a vehicle, it is difficult to change the sitting posture at a frequency sufficient to avoid problems including muscle and pressure related pain.

It is recommended that drivers avoid sitting in the same position for more than 30 minutes. This is, however, difficult to do when sitting in a prior art vehicle seat.

Wheelchair users have limited mobility when seated in a wheelchair. Avoiding pressure sores is crucial and required to keep wheelchair users healthy. For those who use wheelchairs daily, pressure sores may seem like a minor problem, but they can be difficult to heal and can lead to serious infection over time. Pressure sores take just a small pressure, applied continuously on a wheelchair user for less than an hour, to start a chain of negative effects. As wheelchair users are unable to reposition themselves, they are more likely to suffer pressure sores. Accordingly, it would be desirable to provide a way in which wheelchair users can reduce or even eliminate the risk for developing pressure sores.

US2018235377A1 discloses a functional chair capable of adjusting a height of a seat according to a body type and posture of a user. The functional chair includes a first seat configured to support a left pelvis, a second seat which is provided at a right side of the first seat and is configured to support a left pelvis. The chair comprises two separate electrical actuators each mounted to move one of the seats. The chair a seat pressure measuring unit which is respectively provided on the first seat and the second seat to measure pressure of the first and second seats and send a first pressure value and a second pressure value, a controller which receives the first pressure value and the second pressure value from the seat pressure measuring unit to generate a height adjusting signal for adjusting a height of the first and second seats. The chair comprise a rather complex control system including a memory which stores in advance drive command information corresponding to a difference between the first pressure value and the second pressure value, a first actuator which is provided between the first seat and the frame to adjust the height of the first seat according to the height adjusting signal from the controller, and a second actuator which is provided between the second seat and the frame to adjust the height of the second seat according to the height adjusting signal from the controller. This solution is expensive and comprises a complex control system.

Thus, there is a need for a less complex and less expensive support unit and a seat comprising a support unit that makes it possible for users (e.g. wheelchair users) to avoid sitting in the same position for longer periods.

### Summary of the invention

The object of the present invention can be achieved by a support unit as defined in claim 1 and by a seat as defined in claim 10. Preferred embodiments are defined in the dependent subclaims, explained in the following description and illustrated in the accompanying drawings.

The support unit according to the invention is a support unit for changing the configuration of a support area intended for being used to support a seated person, wherein the support unit comprises at least one electrically powered actuator, wherein the support unit comprises a first movably mounted platform and a second movably mounted platform, wherein the first and second movably mounted platforms are connected to and configured to be driven by the at least one actuator in such a manner that the first and second movably mounted platforms can be raised and lowered relative to each other, wherein the first and second movably mounted platforms are driven by a single actuator.

Hereby, it is possible to provide a support unit having a varying support structure. Accordingly, it is possible for users (e.g. wheelchair users) of the support unit to change sitting posture and thus avoid sitting in the same position for longer periods. Therefore, the support unit can reduce or even eliminate the risk for developing pressure sores for user (e.g. wheelchair users). Moreover, it is possible to provide a cost-efficient alternative to the prior art solutions.

The support area is intended for being used to support a seated person. This means that the support area is suitable for being used to support a sitting person. Accordingly, the support area should be large enough to distribute the pressure from the support area to the contact area of the person in such a manner that the sitting on the support area is comfortable.

In one embodiment, the support area is at least 0.15 square meters.

In one embodiment, the support area is at least 0.2 square meters.

In one embodiment, the support area is at least 0.25 square meters.

The support unit comprises at least one electrically powered actuator.

Hereby, the actuator can easily be installed in a vehicle and be connected to the automotive electrical system of the vehicle.

The support unit comprises a first movably mounted platform and a second movably mounted platform, wherein the first and second movably mounted platforms are connected to and configured to be driven by the at least one actuator in such a manner that the first and second movably mounted platforms can be raised and lowered relative to each other. Hereby, it is possible to vary the height of each of the two movably mounted platforms.

It is an advantage that the first and second movably mounted platforms are driven by a single actuator. Hereby, it is possible to secure that the motion of the first platform depends on the motion of the second platform.

In one embodiment, the actuator is configured to perform a displacement along a first axis, wherein the support unit comprises a mechanical transmission unit configured to transfer the power from the actuator to the first and second movably mounted platforms in such a manner that the first and second movably mounted platforms are moved along a second axis extending perpendicular to the first axis.

Hereby, it is possible to provide a small-sized support unit (since the actuator can be displaced along a direction parallel to the support area of the support unit.

In one embodiment, the actuator is a linear actuator.

In one embodiment, the support unit comprises a control unit and a sensor configured to detect the position (displacement) of the actuator.

In one embodiment, the sensor is connected to the control unit so that the data detected by the sensor can be transferred to the control unit.

Hereby, it is possible to use the control unit to control the actuator on the basis of sensor measurements (the position of the actuator). Moreover, the sensor data can be used to control the first movably mounted platform and the second movably mounted platform by mans of the control unit.

In one embodiment, the control unit is programmable by using a human machine interface.

In one embodiment, the control unit is programmable by using a wireless external transmitter (e.g. a smartphone).

In one embodiment, the control unit is configured to control the time period (interval) in which the first and second movably mounted platforms shall move.

In one embodiment, the control unit is configured to control the speed at which the first and second movably mounted platforms move.

In one embodiment, the control unit is configured to control the displacement and direction of displacement of the first and second movably mounted platforms.

Hereby, the control unit can be applied to vary the configuration of the platforms and thus the support structure.

In one embodiment, the first movably mounted platform comprises a support plate configured to at least partly support the seated person, wherein the second movably mounted platform comprises a support plate configured to at least partly support the seated person.

The support plate is preferably provided in the top portion of the support unit so that the support plate at least partly can support the seated person.

In one embodiment, the first and/or second platform is planar. Hereby, it is possible to provide a comfortable support

In one embodiment, the mechanical transmission unit comprises a number of rotatably mounted rollers configured to bear against the bottom side of the support plate of the first movably mounted platform and the support plate of the second movably mounted platform. Hereby, the rollers can press towards the support plates and at the same time be rotated.

In one embodiment, the mechanical transmission unit comprises a number of spherical contact structures configured to bear against the bottom side of the support plate of the first movably mounted platform and the support plate of the second movably mounted platform. Hereby, a smooth movement of the spherical contact structures along the bottom side of the support plates can be provided. Accordingly, a noiseless displacement of the platform can be achieved.

In one embodiment, the mechanical transmission unit comprises two identical transmission structures each comprising two rotatably mounted rollers.

In one embodiment, the mechanical transmission unit comprises two identical transmission structures each comprising two rotatably mounted spherical contact structures.

In one embodiment, the spherical contact structures are slidably arranged on a track structure that is inclined 5-40 degrees relative to the first axis.

The seat according to the invention is a seat wherein a support unit according to the invention is integrated in the seat.

In one embodiment, the seat is an automotive seat.

In one embodiment, the seat is a seat of a wheelchair.

It may be an advantage to have a wheelchair fitted with a seat according to the invention.

In one embodiment, the first and second movably mounted platforms are equally sized.

In one embodiment the support unit is powered by a battery being an integrated part of the support unit.

In one embodiment a power supply is an integrated part of the support unit.

In one embodiment a control unit is an integrated part of the support unit.

### Description of the Drawings

The invention will become more fully understood from the detailed description given herein below. The accompanying drawings are given by way of illustration only, and thus, they are not limitative of the present invention. In the accompanying drawings:
- Fig. 1A: shows a schematic side view of a support unit according to the invention;
- Fig. 1B: shows a side view of a person seated in a seat according to the invention;
- Fig. 1C: shows a rear view of the seat shown in Fig. 1B;
- Fig. 2A: shows a top view of a support unit according to the invention;
- Fig. 2B: shows a perspective top view of the support unit shown in Fig. 2A;
- Fig. 2C: shows a first cross-sectional view of the support unit shown in Fig. 2A;
- Fig. 2D: shows a second cross-sectional view of the support unit shown in Fig. 2A;
- Fig. 3A: shows a perspective top view of the housing, the actuator and mechanical transmission units of the support unit shown in Fig. 2A;
- Fig. 3B: shows a perspective bottom view of the first platform, the actuator and mechanical transmission units of the support unit shown in Fig. 3A;
- Fig. 4A: shows a cross-sectional view of a support unit according to the invention;
- Fig. 4B: shows the actuator and moveably arranged structures needed to displace the platforms of a support unit according to the invention;
- Fig. 5A: shows a top view of a support unit according to the invention;
- Fig. 5B: shows a perspective top view of the support unit shown in Fig. 5A;
- Fig. 6A: shows a top view of a support unit according to the invention and
- Fig. 6B: shows a perspective top view of the support unit shown in Fig. 6A.

### Detailed description of the invention

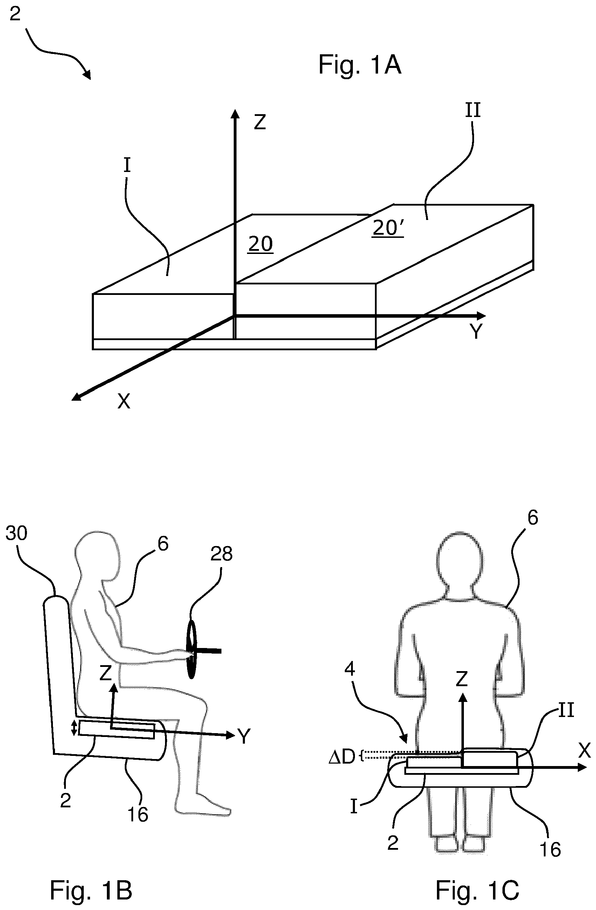

Referring now in detail to the drawings for the purpose of illustrating preferred embodiments of the present invention, a support unit 2 of the present invention is illustrated in Fig. 1A.

Fig. 1A is a schematic side view of a support unit 2 according to the invention. The support unit 2 comprises a first movably mounted platform I and a second movably mounted platform II. The first and second movably mounted platforms I, II are connected to and configured to be driven by the at least one actuator (not shown) in such a manner that the first platform I and the second platform II can be raised and lowered relative to each other by using the actuator.

A Cartesian coordinate system having a longitudinal axis, a lateral axis Y and a transversal axis Y is indicated next to the support unit 2. The transversal axis Z will typically extend basically vertically during normal use of the support unit 2.

The first platform I comprises a first planar support plate 20. The second platform II comprises a second planar support plate 20'. The support plates 20, 20' are configured to be used for changing the configuration of a support area (e.g. of an automotive seat) as indicated in Fig. 1C.

Fig. 1B illustrates a side view of a person 6 seated in a seat 16 according to the invention, wherein Fig. 1C illustrates a rear view of the seat 16 shown in Fig. 1B. The illustration indicates a driving situation, in which the person 6 is seated in the seat 16 and is holding a driving wheel 28 (indicating that the person 6 is driver). The person 6 could, however, also be a wheelchair user sitting in a wheelchair (then there would be no driving wheel 28).

A Cartesian coordinate system having a longitudinal axis, a lateral axis Y and a transversal axis Y is indicated next to the support unit 2.

The seat 16 comprises a support unit 2 that is integrated in the seat 16. The seat 16 moreover comprises a back support 30 extending basically along the transversal axis Z. The person 6 is in contact with the support area 4 of the seat 16.

It can be seen that the support unit 2 comprises a first movably mounted platform I and a second movably mounted platform II. The platforms I, II are arranged in two different heights (vertical positions). Accordingly, there is a difference in height ΔD between the platforms I, II. By displacing the platforms I, II relative to each other it is possible to vary the seat support area 4 and thus make it easier for the person 6 to change the sitting posture at a frequency sufficient to avoid problems including muscle and pressure related pain.

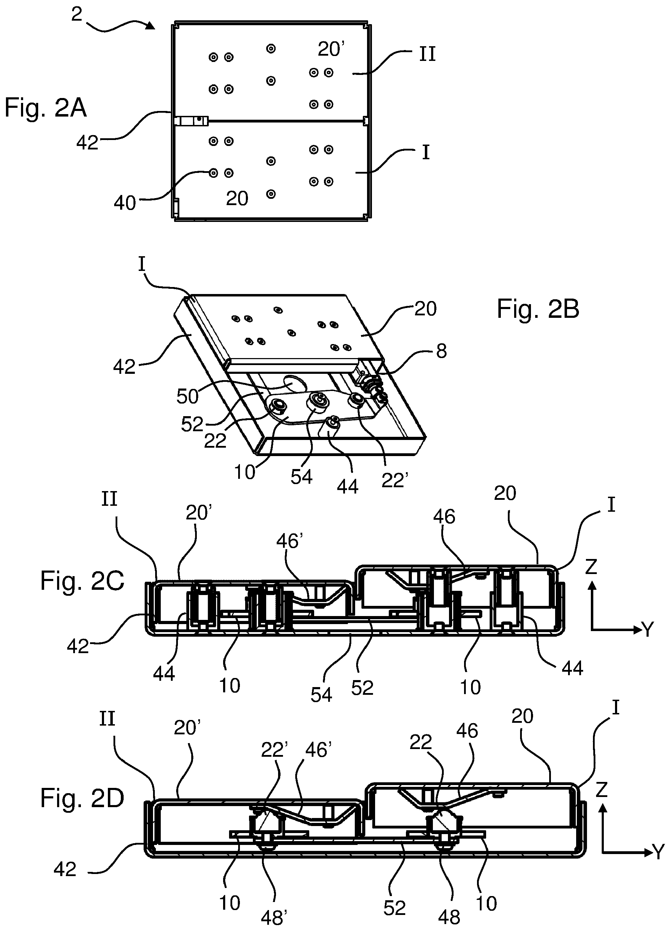

Fig. 2A illustrates a top view of a support unit 2 according to the invention. The support unit 2 comprises a box-shaped housing 42. A first movably mounted platform I having a support plate 20 is arranged in the housing 42. A second movably mounted platform II having a support plate 20' is arranged in the housing 42.

A plurality of mounting structures 40 are visible from the top side of the support plates 20, 20'. These mounting structures 40 (shown in Fig. 2B, Fig. 2C and Fig. 2D) are used to fix underlying elements to the support plates 20, 20'.

In a preferred embodiment, the two support plates 20, 20' are equally sized. Accordingly, the two support plates 20, 20' cover the same area.

In a preferred embodiment, the housing 42 has a square bottom plate (see Fig. 2B, Fig. 2C and Fig. 2D).

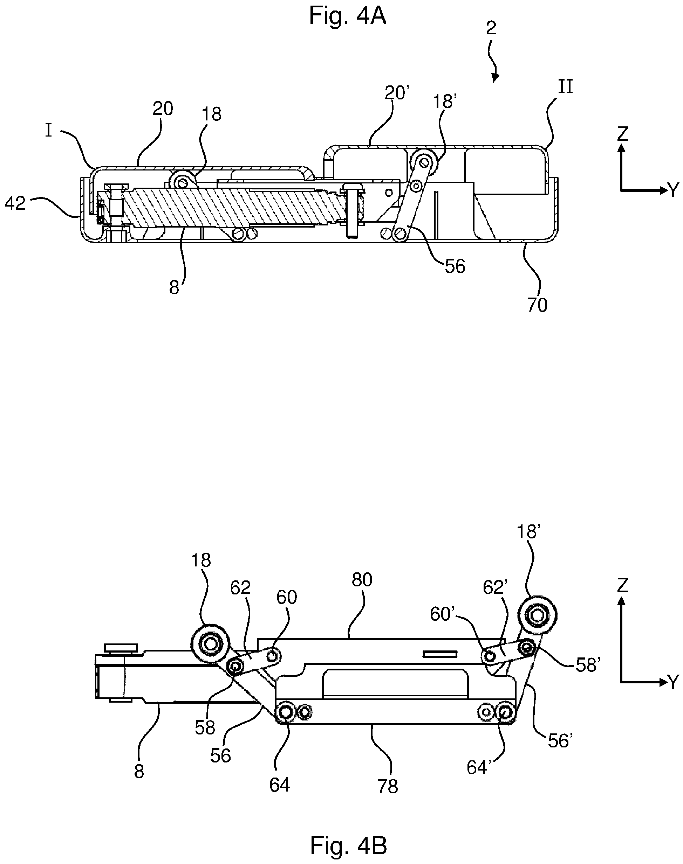

Fig. 2B illustrates a perspective top view of the support unit 2 shown in Fig. 2A. The housing 42 of the support unit 2 comprises a bottom plate 70 (see Fig. 4A) provided with a centrally arranged hole 54. Electrical cables can be inserted into the housing through this hole 54. Accordingly, the support unit 2 can easily be integrated in a seat (as shown in Fig. 1B and Fig. 1C). Fig. 2C and Fig. 2D illustrate cross-sectional views of the support unit 2 shown in Fig. 2A.

It can be seen that the support unit 2 comprises a single electrical actuator 8 arranged in the housing 42. The actuator 8 extends along the side portion of the housing 42. Hereby, the actuator 8 can be extended and shortened along the side portion. The actuator 8 is mechanically connected to a mechanical transmission unit 10. The mechanical transmission unit 10 is plate-shaped and attached to the distal portion of the actuator 8.

The mechanical transmission unit 10 is rotatably attached to the bottom portion 70 of the housing 42 by means of a guide structure 50 having a cylindrical outer portion (cylinder) and an inner portion slidably mounted in the outer cylindrical portion. When the support unit 2 is in use, the inner portion will be attached to a superjacent support plate (however, this is not the case in Fig. 2B since the support plate has been removed for illustrative purposes). Accordingly, the inner portion is of the guide structure 50 will be displaced along the length of the guide structure 50 when the first movably mounted platform I is moved up and down (along the Z axis).

The support unit 2 comprises a mechanical transmission unit 10 arranged under the first movably mounted platform I and a similar mechanical transmission unit 10 arranged under the second movably mounted platform II. The mechanical transmission units 10 are connected to each other by two rotatably attached arms 52. Accordingly, a single actuator 8 can be used to rotate both mechanical transmission units 10.

A cylinder assembly 44 is arranged next to each of the mechanical transmission units 10. Each cylinder assembly 44 is fixed to the bottom plate 70 and protrudes therefrom. The cylinder assembly 44 is configured to stabilize the motion of the platforms I, II. This can be done since each cylinder assembly 44 comprises a cylindrical outer part and an inner part slidably arranged therein. The inner part is attached to the support plate 20, 20'.

Two spaced apart spherical contact structures 22, 22' are attached in each end of each of the two plate-shaped mechanical transmission units 10. The spherical contact structures 22, 22' are configured to bear against the underside of the support plates 20, 20' and hereby provide a vertical force towards the platforms I, II in order to displace the platforms I, II up and down (along the transversal axis Z). The spherical contact structures 22, 22' comprise a spherical contact portion that is rotatably mounted in a bearing housing. Accordingly, the spherical contact structures 22, 22' can roll along the underside of a structure like the inclined structure 46, 46' (se Fig. 2C and Fig. 2D).

When the spherical contact structures 22, 22' roll along the underside of the inclined structure 4 that is attached to the support plate 20, 20', the support plate 20, 20' will be displaced along the transversal axis Z. Therefore, the platforms I, II can be displaced along the transversal axis Z by displacing the spherical contact structures 22, 22' along the underside of the inclined structure 4.

Each of the spherical contact structures 22, 22' has a foot 48, 48' that is resting on the bottom plate 70 of the housing 42. In a preferred embodiment, the feet 48, 48' comprise a semi-spherical or spherical contact portion configured to be placed on the bottom plate 70 of the housing 42. In one embodiment, the semi-spherical or spherical contact portion is rotatably attached to the proximal end of a base portion, wherein the spherical contact structure 22, 22' is rotatably attached to the distal portion of the base portion. The base portion may constitute a bearing housing.

In Fig. 2C and Fig. 2D it can be seen that the actuator 8 has rotated the mechanical transmission units 10 and thus moved the spherical contact structure 22, 22' into positions, in which the platforms I, II are displaced relative to each other along the Z axis

Cartesian coordinate systems are indicated to illustrate the two lateral axes X, Y and the transversal axis Z in Fig. 2A-D.

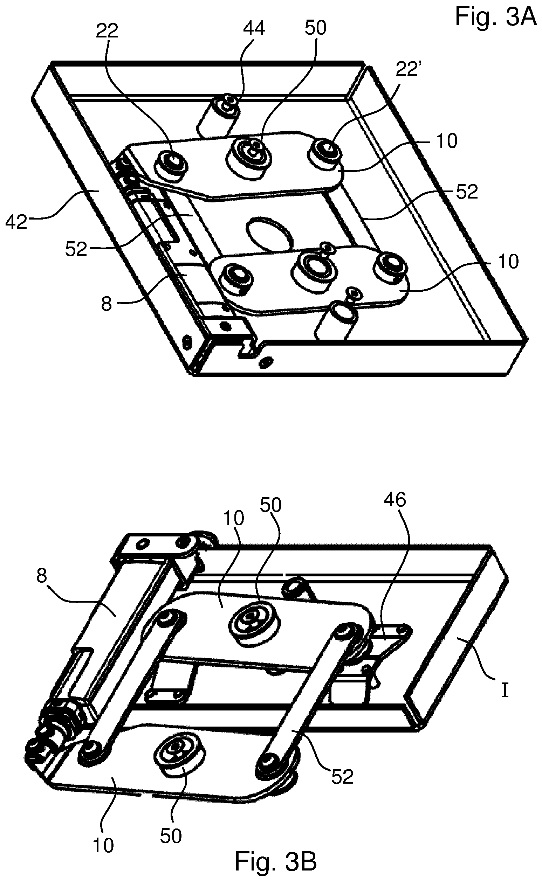

Fig. 3A illustrates a perspective top view of the housing 42, the actuator 8 and mechanical transmission units 10 of the support unit 2 shown in Fig. 2A, Fig. 2B, Fig. 2C and Fig. 2D.

Fig. 3B illustrates a perspective bottom view of the first platform I, the actuator 8 and mechanical transmission units 10 of the support unit 2 shown in Fig. 3A.

Fig. 4A illustrates a cross-sectional view of a support unit 2 according to the invention. Fig. 4B illustrates the actuator and movably arranged structures needed to displace the platforms I, II of the support unit 2. The support unit 2 comprises a box-shaped housing 42. A first movably mounted platform I and a second movably mounted platform II are arranged in the housing 42. The first and second movably mounted platforms I, II are connected to and configured to be driven by an electrical actuator 8 in such a manner that the first and second movably mounted platforms I, II can be raised and lowered relative to each other.

The electrical actuator 8 extends along the lateral axis Y that extends along the bottom plate 70 of the housing 42. The first movably mounted platform I comprises a support plate 20. Likewise, the second movably mounted platform II comprises a support plate 20' of similar size and shape.

The support unit 2 comprises a mechanical transmission unit that in each end comprises a first lever 56, 56' that is rotatably mounted to a lower base structure 78 by means of a pivot joint 64, 64'. A roller 18, 18' is rotatably attached to the distal end of each lever 56, 56. Accordingly, the rollers 18, 18 can bear against the support plates 20, 20' and hereby displace it along the transversal axis Z (see the coordinate system illustrated next to the support unit 2).

Each lever 56, 56' is rotatably attached to a pivot arm 62, 62 by means of a pivot joint 58, 58'. Moreover, the pivot arm 62, 62' is rotatably attached to a top base structure 80. In one embodiment, the lower base structure 78 is fixed to the bottom plate 70 of the housing 42, wherein the top base structure 80 is connected to the actuator 8. In another embodiment, the top base structure 80 is fixed to the bottom plate 70 of the housing 42, wherein the lower base structure 78 is connected to the actuator 8.

The electrical actuator 8 is arranged and configured to be moved along the lateral axis Y and hereby rotate a lever 56 about its axis of rotation corresponding to the axis of the pivot joint 64, 64'.

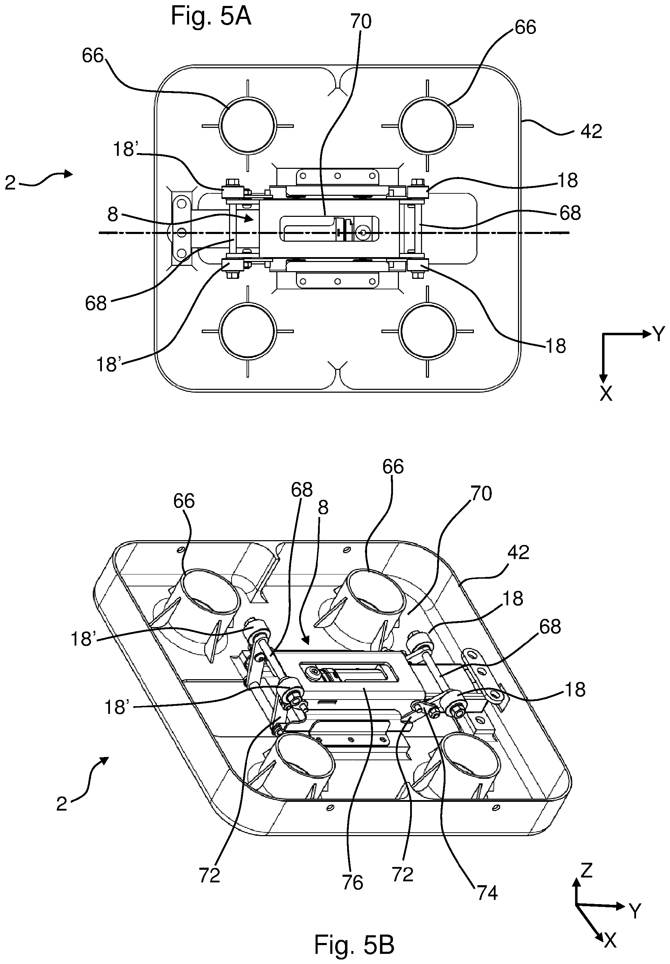

Fig. 5A illustrates a top view of a support unit 2 according to the invention, wherein Fig. 5B illustrates a perspective top view of the support unit 2 shown in Fig. 5A. The support unit 2 comprises two platforms (not shown) that each comprises a support plate like one of the ones shown in and explained with reference to the previous figures. The support unit 2 comprises a housing 42 provided with four guide members 66 having a cylindrical inner shape. Each of these guide members 66 are configured to receive and guide a male insert structure fixed to the platforms (not shown) in order to ensure a controlled and stabile motion of the platforms.

The support unit 2 comprises a mechanical transmission unit. At each end of the mechanical transmission unit a shaft 68 is mounted in two rotatably mounted mounting arms 72. A pivot arm 74 is rotatably attached to each mounting arm 72 and a wall portion of an actuator assembly 76. Rollers 18, 18' are rotatably attached to the end portions of the shafts 68. These rollers 18, 18 are arranged and configured to bear against a support plate of a platform (not shown) and hereby displace the support plate along the transversal axis Z (see the coordinate system illustrated next to the support unit 2).

The actuator assembly 76 is centrally arranged in the housing 42 and comprises an electrical actuator 8 arranged and configured to rotate the shafts 68 and hereby displace the rollers 18, 18' along the transversal axis Z. Accordingly, the actuator 8 is configured to displace a first and a second movably mounted platform relative to each other along the axis Z. Hereby, the platforms can be raised and lowered relative to each other.

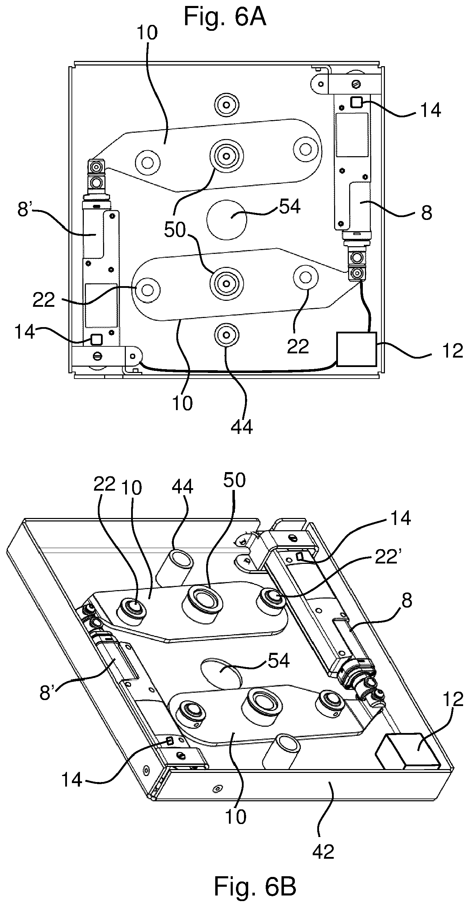

Fig. 6A illustrates a top view of a support unit 2 according to the invention, wherein Fig. 6B illustrates a perspective top view of the support unit 2 shown in Fig. 6A. The support unit 2 comprises two platforms (not shown) that each comprises a support plate like one of the ones shown in and explained with reference to the previous figures.

The support unit 2 basically corresponds to the one shown in Fig. 2A, Fig. 2B, Fig. 2C, Fig. 2D, Fig. 3A and Fig. 3B, however, the support unit 2 comprises two actuators 8, 8'. The support unit 2 comprises two mechanical transmission units 10 corresponding to the one shown in and explained with reference to Fig. 2B, Fig 3A and Fig. 3B. The mechanical transmission units 10 are, however, not mechanically connected to each other. Instead, each mechanical transmission unit 10 is driven by a single actuator 8, 8'.

The support unit 2 comprises a control unit 12 that is electrically connected to the actuators 8, 8'.

The support unit 2 comprises two sensors 14. A sensor 14 is arranged to measure the displacement of the first actuator 8. Likewise, a sensor 14 is arranged to measure the displacement of the first actuator 8. Even though it is not shown, the sensors 14 are connected to the control unit 12. This may be done by cables or by using a wireless connection.

### List of reference numerals

- 2: Support unit
- 4: Support area
- 6: Person
- 8, 8': Actuator
- 10: Mechanical transmission unit
- 12: Control unit
- 14: Sensor
- 16: Seat
- 18, 18: Roller
- 20: Support plate
- 22, 22': Spherical contact structure
- 26: Track structure
- 28: Driving wheel
- 30: Back support
- X, Y, Z: Axis
- ΔD: Difference in height
- I: First moveably mounted platform
- II: Second moveably mounted platform
- 40: Mounting structure
- 42: Housing
- 44: Cylinder assembly
- 46, 46': Inclined structure
- 48, 48': Foot
- 50: Guide structure
- 52: Arm
- 54: Hole
- 56, 56': Lever
- 58, 58': Joint
- 60, 60': Joint
- 62, 62': Pivot arm
- 64, 64: Joint
- 66: Guide member
- 68: Shaft
- 70: Bottom plate
- 72: Mounting arm
- 74: Pivot arm
- 76: Actuator assembly
- 78: Lower base structure
- 80: Top base structure

## Claims

1. A support unit (2) for changing the configuration of a support area (4) intended for being used to support a seated person (6), said support unit (2) comprising at least one electrically powered actuator (8), wherein the support unit (2) comprises a first movably mounted platform (I) and a second movably mounted platform (II), wherein the first and second movably mounted platforms (I, II) are connected to and configured to be driven by the at least one actuator (8) in such a manner that the first and second movably mounted platforms (I, II) can be raised and lowered relative to each other, **characterised in that** the first and second movably mounted platforms (I, II) are driven by a single actuator (8).

2. A support unit (2) according to claim 1, **characterised in that** the actuator (8) is configured to perform a displacement along a first axis (Y), wherein the support unit (2) comprises a mechanical transmission unit (10) configured to transfer the power from the actuator (8) to the first and second movably mounted platforms (I, II) in such a manner that the first and second movably mounted platforms (I, II) are moved along a second axis (Z) extending perpendicular to the first axis (Y).

3. A support unit (2) according to one of the preceding claims, **characterised in that** the actuator (8) is a linear actuator, wherein the support unit (2) comprises a control unit (12) and a sensor (14) configured to detect the position (displacement) of the actuator (8), wherein the sensor (14) is connected to the control unit (12) so that the data detected by the sensor (14) can be transferred to the control unit (12).

4. A support unit (2) according to claim 3, **characterised in that** the control unit (12) is programmable either by using a human machine interface or a wireless external transmitter (e.g. a smartphone).

5. A support unit (2) according to claim 4, **characterised in that** the control unit (12) is configured to control the:
a) time period (interval) in which the first and second movably mounted platforms (I, II) shall move and/or
b) the speed at which the first and second movably mounted platforms (I, II) move and/or
c) the displacement and direction of displacement of the first and second movably mounted platforms (I, II).

6. A support unit (2) according to one of the preceding claims, **characterised in that** the first movably mounted platform (I) comprises a support plate (20) configured to at least partly support the seated person (6) and that the second movably mounted platform (II) comprises a support plate (20') configured to at least partly support the seated person (6).

7. A support unit (2) according to claim 6, **characterised in that** the mechanical transmission unit (10) comprises a number of rotatably mounted rollers (18, 18') or spherical contact structures (22, 22') configured to bear against the bottom side of the support plate (20) of the first movably mounted platform (I) and the support plate (20') of the second movably mounted platform (II).

8. A support unit (2) according to claim 7, **characterised in that** the mechanical transmission unit (10) comprises two identical transmission structures each comprising two rotatably mounted rollers (18, 18') or spherical contact structures (22).

9. A support unit (2) according to claim 8, **characterised in that** the spherical contact structures (22) are slidably arranged on a track structure (26, 26') that is inclined 5-40 degrees relative to the first axis (Y).

10. A seat (16), **characterised in that** a support unit (2) according to one of the preceding claims is integrated in the seat (16) being an automotive seat or a seat of a wheel chair.
